# EUROPÄISCHE PATENTANMELDUNG

(11) **EP 1 779 736 A1**
(43) Veröffentlichungstag der Anmeldung: **02.05.2007**
(21) Anmeldenummer: 05090310.3
(22) Anmeldetag: 15.11.2005
(51) Int. Cl.: A23L 1/337, A21D 2/36, A23L 1/0532, A23L 1/304

(54) **Eine Methode für die Aufbereitung von Lebensmitteln mit verlangsamter Freigabe von Nährstoffen**

(30) Priorität: 18.10.2005 CN 200510094957
(71) Anmelder: Su, Yan, 14050 Berlin (DE)
(72) Erfinder: Su, Yan, 14050 Berlin (DE); Su, Meikun, 14050 Berlin (DE)

(57) **Zusammenfassung**

Eine Methode für die Aufbereitung von Lebensmitteln, die ihre Nähestoffe langsam freigeben. Diese Methode gehört zu dem Bereich der Technologien für die Lebensmittelbearbeitung.

Bei der Aufbereitung der Lebensmittel wird das raffinierte Seetangmehl dem Getreidemehl zugesetzt. Die resultierende Getreidemehlmischung wird dann anhand normaler Aufbereitungsmethoden zu einer Vielzahl von Fertiggerichten verarbeitet. Vor dem Verzehr, oder in der späteren Phase der Aufbereitung wird noch der Lebensmittelzusatz Kalzium zugesetzt. Durch die befestigende Wirkung des Kalzium Ions und des Seetangmehls werden die feinen Granulate der Stärkekohlenhydrate mit einer physikalischen Adaptionsschicht gekapselt. Ein so gekapseltes Granulat kann nur unter den pH Bedingungen im Darm langsam aufgelöst werden, um Nähestoffe wie Kohlenhydrate, Proteine und Fette langsam freizugeben.

Die Lebensmittel mit verlangsamter Freigabe von Nährstoffen, die anhand dieser Erfmdung aufbereitet sind, sind eine gesunde Nahrungsquelle für die Zielgruppe mit hohem Blutzuckerspiegel, Blutfettwert und Übergewicht.

## Beschreibung

### Technischer Bereich

Eine Methode für die Herstellung der Lebensmitteln mit verlangsamter Freigabe von Nährstoffen, gehört zur Technologie für die Lebensmittelbearbeitung.

### Hintergrund

Getreide ist reich an Stärkekohlenhydraten und ist eine täglich unverzichtbare Nahrungsquelle für den Menschen. Die Einnahme vom Getreidelebensmitteln soll nicht weniger als 150g pro Tag betragen. Stärkekohlenhydrate werden durch die Wirkung der vom Verdauungsapparat abgesonderten Stärkeenzyme hydrolysiert, und sehr schnell zu Glukose umgewandelt bzw. als Glukose vom Blut im Körper aufgenommen. Die Glukose in einem gesunden Menschen beteiligt sich am Stoffwechsel der Organe. Die Glukose bei Diabetespatienten kann sich dagegen nicht normal im Organstoffwechsel beteiligen, was zur Verschlechterung der Diabetes führt. Die Gefahr des hohen Blutzuckerspiegels gibt es auch bei Menschen mit hohem Blutfettwert, Übergewicht, hohem Blutdruck - das sogenannte Stoffwechselsyndrom.

### Gegenstand der Erfindung

Die Zielsetzung dieser Erfindung liegt in der Herstellungsmethode für die Lebensmittel mit verlangsamter Freigabe von Nährstoffen. Mit ihrer Hilfe werden die Nährstoffe in Lebensmitteln wie Kohlenhydrate, Eiweiß und Fett langsam freigegeben. Dadurch kann man den Blutzuckerspiegel kontrollieren. Diese Methode ist daher eine Erfindung für die effektive Kontrolle des Blutzuckerspiegels.
Das technische Verfahren der Erfindung: das raffinierte Seetangmehl wird im warmem Wasser zu einer Suspensionsflüssigkeit gemischt. Der pH Wert der Suspensionsflüssigkeit wird reguliert. Danach wird die Suspensionsflüssigkeit gekühlt, und in das ausgewählte Getreidemehl zugesetzt. Die Mischung soll dann gleichmäßig zu kloßartiger Form zusammengeknetet werden. Dabei soll vermieden werden, dass die Mischung zu heiß und durchgekocht wird. Die Klöße kann man einige Zeit liegen lassen und dann formen durch Pressen. Danach wird das geformte Lebensmittel gebacken, gegrillt, geröstet, getrocknet oder zu einem Kleister befestigt bzw. bearbeitet. Vor dem Verzehr bzw. in der späteren Phase der Aufbereitung soll noch Lebensmittelzusatz Calcium beigefügt werden, um das Lebensmittel mit verlangsamter Freigabe von Nähestoffen fertigzustellen.
(1) Proportion: der Anteil von raffiniertem Seetangmehl soll 0,5% ~ 8% des Gewichts vom Getreidemehl betragen.
(2) Vorbereitung des Seetangsols: das raffinierte Seetangmehl soll mit einer geeigneten Wassermenge zusammen zu einer Suspensionsflüssigkeit gemischt werden. Bei einer Temperatur von 60~80°C soll der PH-Wert der Flüssigkeit mit Hilfe der Alkalilösung zu 8-11 gerändert werden. Dadurch bekommt man ein Seetangsol, welches man dann bis auf 10°C abkühlen soll. Die zugesetzte Wassermenge soll ausreichen, um das Getreidemehl zu der kloßartigen Form zu kneten.
(3) Kneten: das Getreidemehl und Seetangsol sollen durchgemischt und zu einem Kloß geknetet werden.
(4) Formen: der Getreidekloß soll jetzt mit Hilfe der Pressmaschine zu der gewünschten Form bearbeitet werden.
(5) Befestigen: durch Backen, Grillen, Rösten , Trocknen soll das Lebensmittel befestigt, oder zu einem Kleister bearbeitet werden.
(6) Aufbereitung der Gewürzbeilage: geeignete Menge von Gewürzen bzw. Geschmackstoffen und Lebensmittelzusatz Kalzium können jetzt zusammen gemischt werden, um die Beilage für das Lebensmittel zu erstellen. Die Menge der Lebensmittelzusatz Kalzium soll 0.1%~2% der Menge des verwendeten Getreidemehls betragen.

Vor dem Verzehr kann man das Gericht mit der Gewürzbeilage mit heißem Wasser erhitzen oder im Wasser kochen. Man kann auch den Lebensmittelzusatz Kalzium während des Knetens von Getreidemehl und Seetangsol zugeben, und die Mischung zusammen formen und befestigen, um das Lebensmittel mit verlangsamter Freigabe von Nähestoffen fertigzustellen.

Das erwähnte Getreidemehl kann aus Reismehl, Weizenmehl, Sojamehl, Kartoffelmehl, oder der Mischung aus einigen solchen Getreidearten bestehen. Für den erwähnten Lebensmittelzusatzstoff Kalzium kann Kalziumlaktat, Kalciumgluconat, Kalciumhydroxid oder Kalciumchlorat benutzt werden. Die erwähnten Gerichte sind von der Art Nudeln, Instantnudeln, Reisnudel bzw. Instantreisnudeln, Cakes oder Brot.

Die nützliche Wirkung der Erfindung: bei Aufbereitung der Lebensmittel wird das raffinierte Seetangmehl dem Getreidemehl zugesetzt. Das resultierende Getreidemehl wird dann anhand einer normalen Aufbereitungsmethode zu einer Vielzahl von Fertiggerichten verarbeitet. Vor dem Verzehr oder in der späteren Phase der Aufbereitung wird noch der Lebensmittelzusatz Kalzium zugesetzt. Durch die befestigende Wirkung des Kalzium Ions und des Seetangmehls werden die feinen Granulate von Stärkekohlenhydraten durch eine physikalische Adaptionsschicht gekapselt. So ein gekapseltes Granulat kann nur unter der pH Bedingung im Darm langsam aufgelöst werden, um Nährstoffe wie Kohlenhydrate, Proteine und Fette freizugeben. Die Lebensmittel mit verlangsamter Freigabe von Nährstoffen, die anhand dieser Erfindung aufbereitet sind, sind eine gesunde Nahrungsquelle für die Zielgruppe mit hohem Blutzuckerspiegel, Blutfettwert und mit Übergewicht.

### Die Konkreten Anwendungen

**Anwendungsbeispiel 1** - Aufbereitung von Fadennudeln mit verlangsamter Freigabe von Nährstoffen.
Weizenmehl (je nach Bedarf unterschiedliche Typen) soll als Hauptzutat benutzt werden. Gebraucht werden 100 kg Weizenmehl, 8 kg raffiniertes Seetangmehl und 26 kg 60-80 °C warmes Wasser. Seetangmehl soll zuerst zur Suspensionsflüssigkeit gemischt werden, und danach unter pH 8-11 mit Hilfe der Lebensmittel Na₂CO₃ bzw. Lebensmittel NaOH Lösung zu einem Seetangsol bearbeitet. Das Sol soll dann auf 10 °C gekühlt werden. Es soll bei der Erstellung vom Seetangsol ständig gerührt und mit Seetangmehl zugesetzt werden, um zu vermeiden, dass das Sol Klumpen bildet. Die 100 kg Weizenmehl sollen mit dem Seetangsol zusammen gemischt, gerührt, geknetet und gepresst und dann im Trockenraum getrocknet werden. Der Trockenvorgang soll aus drei Phasen bestehen - Befestigung mit niedriger Temperatur, Trocknen mit hoher Temperatur, und dann Kühlung mit niedriger Temperatur. Nach der Kühlung bekommt man ca. 84 kg geformte Fadennudeln als Fertigprodukt. Man kann die Menge in 70-100g von Fadennudeln in Papierpackung verpacken. Als Gewürzbeilage kann man unterschiedliche Gewürze verwenden. Für jede Packung Gewürze soll noch 0,1~2g Kalziumlaktat zugesetzt werden.

**Anwendungsbeispiel 2** - Aufbereitung von Fadennudeln mit verlangsamter Freigabe von Nährstoffen.
Es wird 0.5 kg raffiniertes Seetangmehl gebraucht. Für die Gewürzbeilage zu der Gewürzpackung soll stattdessen 0,1~2g Kalciumgluconat benutzt werden. Ansonst wie in Anwendungsbeispiel 1.

**Anwendungsbeispiel 3** - Aufbereitung von Instantnudeln mit verlangsamter Freigabe von Nährstoffen.
Zusammensetzung wie in 1. Weizenmehl und Seetangsol sollen zusammen in die Horizontaldoppelachse-Mischmaschine eingegeben, und zu Krümeln geknetet werden. Dann kann dieses Vorprodukt durch Grobpresser und Feinpresser und mehrere Pressvorgänge zu dünnem Nudelteig gepresst werden. Der Teig wird mit der Hilfe der Schneidmaschine zu Wellennudeln geschnitten. Die Nudeln sollen dann in Tunneldampfmaschine gekocht werden, und durch Schneidmaschine zu erwünschten Portionen geschnitten werden. Die Nudelportionen sollen dann im Bratenofen zu gebratenen Nudeln oder durch Heißluft-Trockenmaschine zu Trockennudeln verarbeitet werden. Die Nudel schnell trocknen lassen und durch eine Kühlungsmaschine zu Zimmertemperatur kühlen. Die Gewürzbeilage kann gleich wie in 1 vorbereitet werden. Die Nudelportion und Gewürzbeilage sollen dann in Verpackungsmaschine vakuumverpackt und schließlich in eine Kiste verpackt und gelagert werden.

**Anwendungsbeispiel 4** - Aufbereitung von Reisnudeln mit verlangsamter Freigabe von Nährstoffen.
Qualitätsreis wird benutzt, zusammen mit dem raffinierten Seetangsol, was aus Seetangmehl von 4% des Gewichts des Reises erstellt ist. Die Aufbereitungsmethode: Reis in Wasser eintauchen und durchtränken, trocken lassen, zum Mehl reiben lassen, sieben lassen and dampfen, dann pressen und kneten. Dann formen, zu Reisnudeln schneiden, trocknen und checken. Schließlich sollen die Reisnudeln in 70~100 g Portionen verpackt werden. Für die Gewürzbeilage kann eine kleine Portion unterschiedlicher Gewürze verwendet werden. Zusätzlich sollen 0,1~2g Kalciumchlorat zugegeben werden.

**Anwendungsbeispiel 5** - Aufbereitung von Brot mit verlangsamter Freigabe von Nährstoffen.
Ähnlich kann man Brot mit verlangsamter Freigabe von Nährstoffen aufbereiten. Den Mehlkloß soll man aufgehen lassen. Bei der letzten Phase dieses Vorgangs soll noch Lebensmittelkalzium zugesetzt werden. Danach soll der Kloß zu Brot geformt und im Backofen gebacken werden. Dadurch bekommt man Brot mit verlangsamter Freigabe von Nährstoffen.

## Patentansprüche

1. Eine Methode für die Aufbereitung von Lebensmitteln, die ihre Nährstoffe langsam freigeben. Die Besonderheiten sind wie folgt aufgelistet: das raffinierte Seetangmehl wird mit Hilfe von warmem Wasser in einer Suspensionsflüssigkeit aufgelöst. Der pH-Wert der Suspensionsflüssigkeit wird reguliert. Dann wird die Flüssigkeit gekühlt, mit Getreidemehl durchgemischt und zu einer kloßartigen Form geknetet. Dabei soll vermieden werden, dass die Mischung zu heiß wird und durchgekocht wird. Die Mischung soll man dann einige Zeit liegen lassen und durch Pressen formen und dann gebacken, gegrillt, geröstet, getrocknet oder zu einem Kleister befestigen bzw. bearbeiten. Vor dem Verzehr bzw. in der späteren Phase der Aufbereitung soll noch Lebensmittelzusatz Kalzium zugesetzt werden, um das Lebensmittel mit verlangsamter Freigabe von Nährstoffen fertigzustellen.
(1) Proportion: der Anteil von raffiniertem Seetangmehl soll 0,5% ~ 8% des Gewichts vom Getreidemehl betragen.
(2) Vorbereitung des Seetangsols: das raffinierte Seetangmehl soll mit einer geeigneten Menge von Wasser zusammen zu einer Suspensionsflüssigkeit vermischt werden. Bei einer Temperatur von 60~80°C soll der PH-Wert der Flüssigkeit mit Hilfe der Alkalilösung zu 8-11 gerändert werden. Dadurch bekommt man ein Seetangsol, welches man dann bis auf 10°C abkühlen soll. Die Menge des zugesetzten Wassers soll ausreichen, um das Getreidemehl zu der kloßartigen Form zu kneten.
(3) Kneten: das Getreidemehl und Seetangsol sollen durchgemischt und zu einem Kloß geknetet werden.
(4) Formen: der Getreidekloß soll jetzt mit Hilfe der Pressmaschine zu der gewünschten Form bearbeitet werden.
(5) Befestigen: durch Backen, Grillen, Rösten , Trocknen soll das Lebensmittel befestigt oder zu einem Kleister bearbeitet werden.
(6) Aufbereitung der Gewürzbeilage: geeignete Menge von Gewürzen bzw. Geschmackstoffen, sowie Lebensmittelzusatz Kalzium können jetzt zusammen gemischt werden, um die Beilage für das Lebensmittel zu erstellen. Die Menge der Lebensmittelzusatz Kalzium soll 0.1%~2% der Menge des verwendeten Getreidemehls betragen.
Vor dem Verzehr kann man das Gericht mit der Gewürzbeilage mit heißem Wasser erhitzen oder im Wasser kochen. Man kann auch den Lebensmittelzusatz Kalzium während des Knetens des Getreidemehls mit Seetangsol zugeben und die Mischung zusammen formen und befestigen, um das Lebensmittel mit verlangsamter Freigabe von Nähestoffen fertigzustellen.

2. Das erwähnte Getreidemehl in der Herstellungsmethode für Lebensmittel mit verlangsamter Freigabe von Nähestoffen im Anspruch 1 kann aus Reismehl, Weizenmehl, Sojamehl, Kartoffelmehl, oder der Mischung aus einigen solchen Getreidearten bestehen.

3. Die erwähnte Alkalilösung für die Regulierung des pH Werts bei der Zubereitung des Seetangsols im Anspruch 1 der Erstellungsmethode für Lebensmittel mit verlangsamter Freigabe von Nähestoffen kann das Lebensmittel Na₂CO₃ oder Lebensmittel NaOH sein.

4. Der erwähnte Kalziumzusatz im Anspruch 1 der Erstellungsmethode für Lebensmittel mit verlangsamter Freigabe von Nähestoffen kann Kalziumlaktat, Kalciumgluconat, Kalciumhydroxid oder Kalciumchlorat sein.

5. Die erwähnten Gerichte im Anspruch 1 der Herstellungsmethode für Lebensmittel mit verlangsamter Freigabe von Nährstoffen sind von der Art Nudeln, Instantnudeln, Reisnudel bzw. Instantreisnudeln, Cakes oder Brot.
